# FASCICULE DE BREVET EUROPEEN

(11) **EP 0 773 126 B1**
(45) Date de publication et mention de la délivrance du brevet: **19.01.2000**
(21) Numéro de dépôt: 96402370.9
(22) Date de dépôt: 07.11.1996
(51) Int. Cl.: B60J 5/04

(54) **Pièce de structure et de garnissage et procédé de fabrication d'une telle pièce**
Konstruktionselement mit Verkleidung und Verfahren zur Herstellung eines solchenElements
Structured element with a coating, and method for its manufacture

(30) Priorité: 07.11.1995 FR 9513148
(43) Date de publication de la demande: 14.05.1997
(73) Titulaire: MATRA AUTOMOBILE, 75116 Paris (FR)
(72) Inventeur: Decroix, Philippe, 78310 Maurepas (FR); Marcellas, Michel, 78470 Saint-Remy (FR); Champion, Alain, 18100 Vierzon (FR)
(74) Mandataire: Fort, Jacques

(56) Documents cités:
- EP-A- 0 318 640
- DE-A- 1 923 943
- DE-A- 3 209 052
- FR-A- 2 416 809
- FR-A- 2 658 235
- GB-A- 2 119 839

## Description

La présente invention concerne les pièces de structure et de garnissage destinées à remplir d'une part un rôle de résistance mécanique et d'élément de paroi et d'autre part une fonction d'aspect. L'invention trouve une application particulièrement importante, bien que non exclusive, dans la réalisation d'ouvrants de véhicules automobiles.

Classiquement, les ouvrants latéraux des véhicules automobiles destinés au transport de personnes sont constitués d'une structure centrale, d'une peau de carrosserie constituant garnissage extérieur et d'un garnissage intérieur. La structure, généralement en acier ou en alliage d'aluminium, est constituée d'un cadre de vitre et d'un caisson sur lequel sont reportés d'un côté la peau de carrosserie, en métal ou en résine moulée et, de l'autre côté, le garnissage intérieur. Les accessoires habituels (lève-vitre, serrure, circuits électriques) sont placés dans un espace délimité par la structure. Des passages sont ménagés à travers le garnissage extérieur et le garnissage intérieur pour permettre les commandes.

On connaît cependant déjà (FR-A-2658 235) une pièce de structure et de garnissage suivant le préambule de la revendication 1.

La présente invention vise à fournir une pièce de structure pour véhicule de constitution plus simple que celles habituellement utilisées à l'heure actuelle, conservant les fonctions mécaniques et esthétiques.

Dans ce but l'invention propose notamment une pièce de structure suivant la partie caractérisante de la revendication 1.

La peau de garnissage extérieure constitue un panneau de carrosserie.

Une telle constitution simplifie la réalisation de la pièce de structure, puisqu'elle permet d'assurer les fonctions mécaniques et de garnissage interne en une seule opération de moulage. En règle générale, on utilisera, pour constituer le caisson, une matière plastique thermo-durcissable compacte ou alvéolaire. On peut notamment utiliser des résines polyester ou polyuréthane renforcées par de la fibre de verre, ou des hybrides polyuréthane-polyester. La résistance de la résine étant inférieure à celle de l'acier utilisé généralement à l'heure actuelle, la résistance du caisson est accrue par la présence d'éléments de renforcement surmoulés, tels que des barres ou un treillis anti-écrasement, destinés notamment à la protection en cas de choc latéral dans le cas d'une porte latérale de véhicule.

Dans le cas où la pièce de structure appartient à une porte de véhicule, elle comprend de plus un cadre de vitre pincé, au moins sur une partie de son pourtour, entre le caisson et la peau mince.

La feuille de décor surmoulée sur une grande face sera généralement constituée par du textile tissé suivant une armure permettant une déformation dans toutes les directions, cela afin que la feuille puisse s'adapter sans pli à la forme imposée au cours du moulage. Une couche imperméable à la matière thermo-durcissable sera généralement placée entre la feuille d'aspect, lorsque celle-ci est en tissu, et la résine, pour éviter que la résine ne s'infiltre à travers le tissu.

Dans le caisson peuvent être prévus, lors du moulage, des noyaux destinés à recevoir des moyens de fixation de la peau ou d'accessoires. Des ouvertures peuvent être ménagées dans le caisson de façon à permettre l'accès aux accessoires placés entre le caisson et la peau, dans un but de réparation.

L'invention propose également un procédé de fabrication de pièce de structure et de garnissage, suivant la revendication 7.

Les caractéristiques ci-dessus ainsi que d'autres apparaîtront mieux à la lecture de la description qui suit d'un mode particulier de réalisation de l'invention, donné à titre d'exemple non limitatif. La description se réfère aux dessins qui l'accompagnent, dans lesquels :
- la figure 1 est une vue éclatée d'une pièce de structure constituant un ouvrant latéral de véhicule automobile, certains des accessoires n'étant pas représentés ;
- la figure 2 est une vue en perspective montrant le caisson de l'ouvrant de la figure 1, vu du côté opposé à celui de la figure 1 ;
- la figure 3 montre, vu du même côté que sur la Figure 2, l'assemblage du cadre de vitre et du caisson ;
- la figure 4 est une vue en coupe horizontale montrant la disposition des deux éléments constitutifs de l'ouvrant de la Figure 1 par rapport à un pied avant de la carrosserie ;
- la figure 5 est une vue en coupe horizontale au même niveau que celui de la figure 4, montrant la fixation de la peau sur le caisson au niveau de la serrure ;
- la figure 6 est une vue de détail en coupe verticale, montrant le bas de l'ouvrant et son appui contre la carrosserie ;
- la figure 7 d'un schéma de principe destiné à montrer le mode de fabrication du caisson ;
- la figure 8, similaire à la figure 1, montre, de façon simplifiée, une variante de constitution d'un ouvrant latéral.

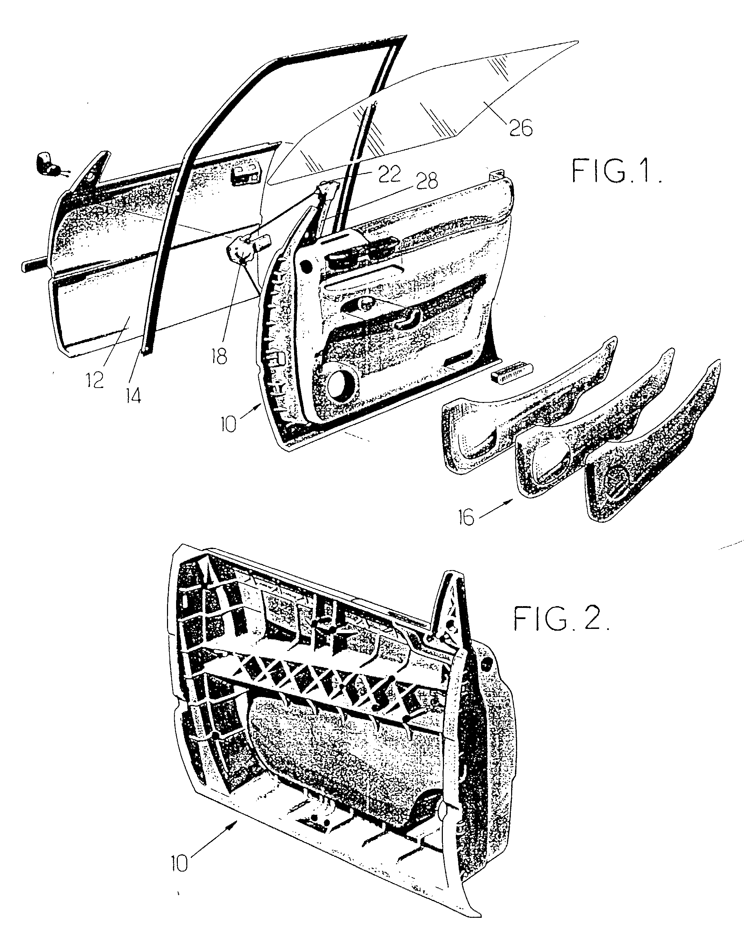

L'ouvrant représenté en vue éclatée sur la figure 1 peut être regardé comme comprenant un caisson 10 en matériau thermo-durcissable, renforcé par des éléments noyés dans la masse et des nervures et ayant une feuille de décor interne surmoulée, une peau mince de garnissage externe 12 et un cadre de vitre 14. Ces trois éléments sont fixés les uns aux autres par des moyens non représentés, tels que des vis ou des rivets. Sur le caisson peuvent être prévus des ajouts 16, tels que des vide-poches rapportés.

La feuille de décor interne peut être en tissu, en textile enduit, en non tissé ou peut être constituée par une pellicule plastique. Sauf lorsque la feuille est imperméable, elle est doublée, côté caisson, par une couche ou pellicule destinée à éviter une imprégnation par le matériau thermo-durcissable pour permettre la fabrication par moulage, en dépit des courbures du caisson, le tissu est en un matériau constitué de façon à être étirable. Le matériau durci peut notamment être du polyester, du polyuréthane, un hybride polyester - polyuréthane renforcé par de la fibre de verre. Il peut être constitué en tout matériau se prêtant au procédé dit "shield molding compound" et prévu pour constituer une pièce relativement mince nervurée ou un matériau de type mousse alvéolaire.

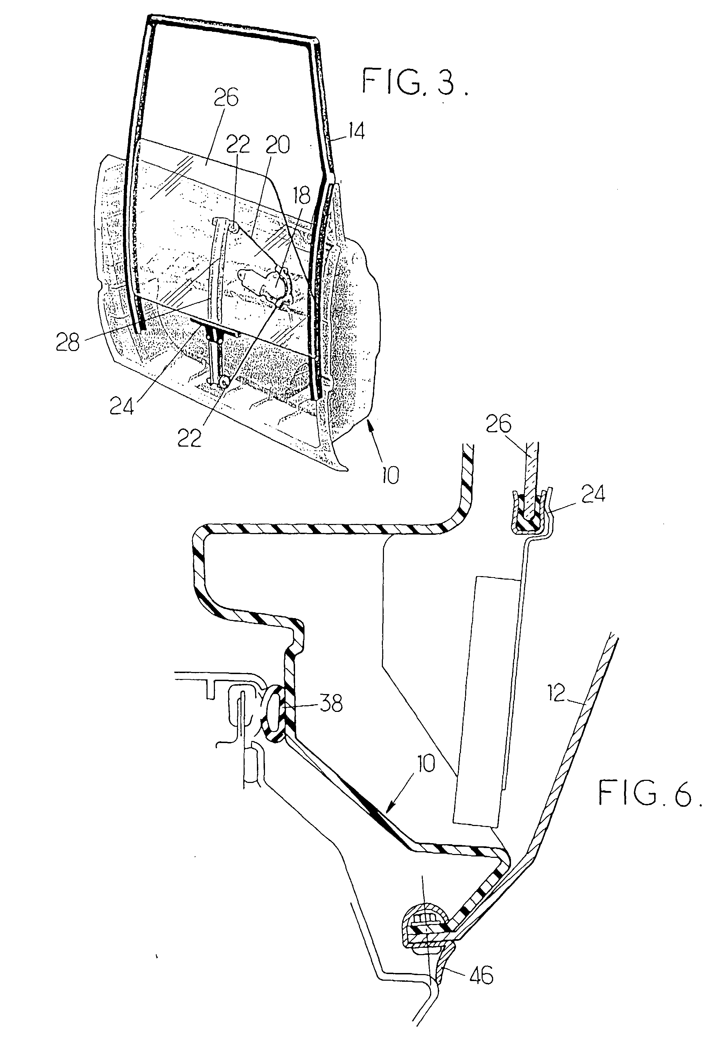

Dans le cas illustré sur les figures 1 et 3, le caisson présente un aspect relativement lisse du côté qui est muni de la feuille de décor. Du côté opposé, il présente des nervures entrecroisées de renforcement et ménage un espace dans lequel se logent les accessoires tels que moteur lève-glace, serrure, faisceau électrique, haut-parleur de portière, interrupteurs et connecteurs. Des éléments de renforcement,tels que des barres anti-écrasement, peuvent être reportées par vissage sur des bossages prévus lors du moulage. D'autres renforts métalliques et les éléments métalliques nécessaires pour constituer les charnières et la gâche de serrure peuvent être surmoulés.

La figure 3 montre comment le cadre de vitre 14 et le moteur lève-vitre 18 peuvent être placés sur le caisson 10. Le moteur 18 entraîne un câble 20 formant une boucle, qui passe sur des galets de renvoi 22 et est fixée, à un patin 24, sur lequel repose la vitre 26. Le patin coulisse verticalement sur un rail métallique 28 fixé au caisson, par exemple par des vis engagées dans des noyaux surmoulés dans le matériau thermo-durcissable.

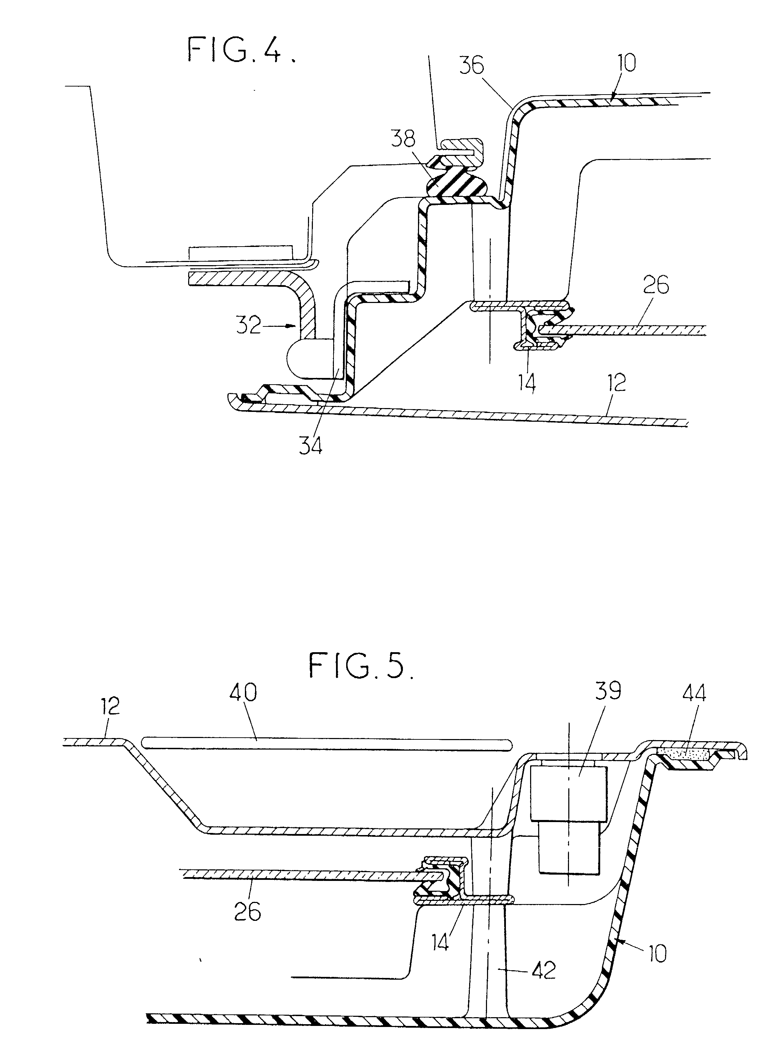

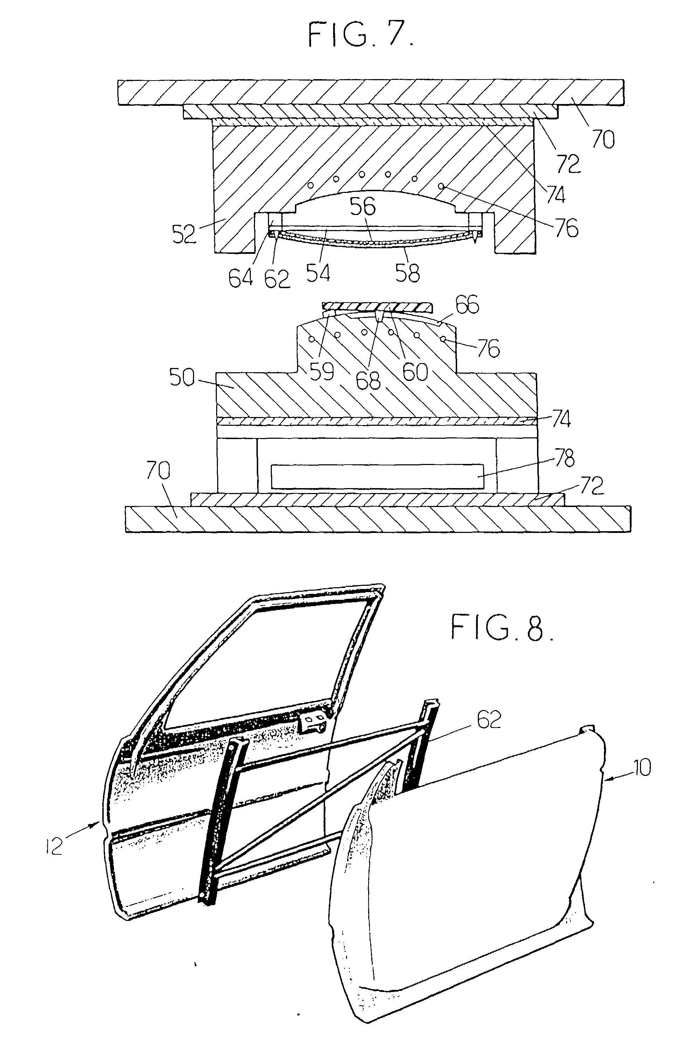

La figure 4 montre, en coupe horizontale au niveau d'une charnière, une fraction de l'ouvrant (constituée par une porte) et d'un pied avant métallique de la carrosserie du véhicule. Un charnon 32 est fixé sur ce pied avant. L'élément de charnière 34 solidaire de l'ouvrant est collé et vissé (ou collé et rivé) sur le caisson en matériau thermo-durcissable, recouvert intérieurement de la feuille de décoration 36. La peau de garnissage 12 déborde du caisson vers l'avant et présente un repli vers l'intérieur. Un joint 38 d'étanchéité entre l'ouvrant et la carrosserie peut être fixé à cette dernière de façon classique. Le barillet de serrure 39 est monté à travers la peau 12 qui comporte une cuvette de réception de la palette d'ouverture 40. La figure 5 montre ce montage ainsi que la présence de bossages ou blocs surmoulés 42 du caisson, permettant de fixer la peau 12. Le bord de la peau est encore fixé à une zone latérale du caisson, par exemple par une bande adhésive 44. En bas de caisse (figure 6), un jonc 46, fixé à la peau 12 et au caisson, assure la protection contre les projections depuis la route.

La figure 7 montre un mode possible de fabrication du caisson 10 dans une presse chauffante comportant un poinçon 50 muni de nervures 66 destinées à donner à la pièce une structure alvéolée et, dans le cas illustré, d'un bossage 68 et une matrice 52. La matrice 52 est prévue pour recevoir un cadre 54 de support d'une feuille de décoration 56 destinée à constituer le décor du côté interne. Cette feuille peut, suivant le cas, être tendue ou laissée flottante, afin d'habiller le caisson sans présenter des plis dans les zones visibles.

Si on souhaite bloquer la feuille de décoration, elle peut être piquée sur des pointes 62. Dans le cas contraire, la feuille peut être simplement retenue par des pinces dans lesquelles elle peut glisser. Le cadre lui-même est retenu par des moyens permettant de le libérer lors de l'ouverture du moule, tels que des aimants 64, des ventouses ou des électro-aimants.

Pour éviter l'imprégnation de la feuille de décoration dans des zones visibles, si elle est poreuse, une pellicule imperméable 58 est placée sous la feuille de décoration 56, sauf éventuellement aux bords qui sont cachés par un jonc de finition après montage de l'ouvrant.

Avant fermeture du moule, les blocs à surmouler 59, puis la masse de matériau thermo-durcissable 60 sont placés sur le poinçon.

A la fermeture des moules, la masse remplit l'empreinte définie par le poinçon et la matrice et plaque la feuille de décoration sur la matrice. La feuille adhère à la masse du fait du moulage.

La masse est généralement renforcée par de la fibre de verre ; des renforts surmoulés peuvent également être prévus. Le matériau thermo-durcissable est généralement choisi de nature telle que la cuisson ne dure que quelques secondes. Elle donne naissance à une pièce qui est ensuite détourée et équipée avant fixation de la peau.

Le montage du poinçon et de la matrice sur les plateaux 70 d'une presse peut être classique. Entre le poinçon (ou la matrice) et le plateau sont interposées une plaque de fixation 72 et une feuille isolante 74. Dans le poinçon et la matrice sont noyés des circuits de chauffe 76. Enfin un éjecteur 78 est prévu dans la matrice pour chasser la pièce durcie.

Dans la variante de réalisation montrée en figure 8, où les éléments correspondant à ceux de la figure 1 sont encore désignés par les mêmes numéros de référence, un cadre de renforcement 62 est placé entre le caisson 10 et la peau de renforcement 12. Il peut être simplement pincé ou peut être fixé par des vis ou des pions sur des bossages ou des blocs surmoulés dans le matériau thermo-durcissable.

## Revendications

1. Pièce de structure et de garnissage destinée à remplir un rôle de résistance mécanique et d'élément de paroi, comprenant un caisson (10) en matériau thermo-durcissable contenant des éléments de renforcement et une peau (12) de garnissage, solidarisée d'une grande face du caisson et constituant un panneau de carrosserie, caractérisée en ce qu'une feuille de décor est surmoulée dans le caisson, sur son autre grande face du côté interne, de façon que la pièce remplisse également une fonction d'aspect.

2. Pièce suivant la revendication 1, caractérisée en ce qu'elle comprend de plus une pellicule ou couche (58 ) imperméable au matériau thermo-durcissable, sous ladite feuille.

3. Pièce suivant la revendication 1 ou 2, caractérisée en ce que le matériau thermo-durcissable est obtenu à partir d'une matière plastique thermo-durcissable, est compact ou alvéolaire et est renforcé par de la fibre de verre.

4. Pièce suivant la revendication 1, 2 ou 3, caractérisée en ce que le caisson contient des éléments de renforcement surmoulés, tels que des barres ou un treillis anti-écrasement.

5. Pièce selon l'une quelconque des revendications 1 à 4, constituant une porte de véhicule, comprenant de plus un cadre de vitre (14) pincé, au moins sur une partie de son pourtour, entre le caisson (10) et la peau mince (12).

6. Pièce selon l'une quelconque des revendications 1 à 5, caractérisée en ce qu'elle est constituée par du textile tissé suivant un mode permettant une déformation dans toutes les directions.

7. Procédé de fabrication d'une pièce de structure et de garnissage suivant l'une quelconque des revendications précédentes, caractérisé en ce que :
- on place une feuille de décoration (56) sur un cadre (54) support, de dimensions supérieures à celles de la structure à réaliser,
- on place le cadre (54) comportant la feuille de décoration dans la matrice (52) d'un moule,
- on dépose, sur le poinçon (50) du moule, une masse (60) de matériau thermo-durcissable, et éventuellement des renforts et noyaux (59) ou "inserts" nécessaires,
- on ferme le moule pour mettre en forme la feuille décor et comprimer le matériau thermo-durcissable dans l'empreinte du moule,
- on chauffe le moule à une température de polymérisation de la résine jusqu'à durcissement, puis on ouvre le moule et on retire le cadre support, puis la structure moulée que l'on soumet à un détourage, et
- on fixe la peau de garnissage (12), après montage des accessoires destinés à être placés dans l'épaisseur de la pièce.

## Patentansprüche

1. Konstruktions- und Verkleidungselement, das die Funktion eines mechanischen Widerstands und eines Wandelements ausüben soll und eine Kassette (10) aus duroplastischem Material umfaßt, die Versteifungselemente und eine Außenhaut (12) enthält, die mit einer großen Fläche der Kassette verbunden ist und eine Karosseriewand bildet, **dadurch gekennzeichnet, daß** in der Kassette auf ihrer anderen großen Fläche (der Innenseite) derart eine Dekorfolie aufgeformt wird, daß das Element auch eine ästhetische Funktion erfüllt.

2. Element nach Anspruch 1, **dadurch gekennzeichnet, daß** es außerdem unter der Folie eine für das duroplastische Material undurchdringliche Haut oder Schicht (58) umfaßt.

3. Element nach Anspruch 1 oder 2, **dadurch gekennzeichnet, daß** das duroplastische Material aus einem duroplastischen Kunststoff erhalten wird, kompakt oder zellig und durch Glasfasern verstärkt ist.

4. Element nach Anspruch 1, 2 oder 3, **dadurch gekennzeichnet, daß** die Kassette aufgeformte Versteifungselemente wie Stäbe oder ein Gitter enthält, die/das gegen Zusammenpressen widerstandsfähig sind/ist.

5. Element nach einem der Ansprüche 1 bis 4, welches eine Autotür bildet und außerdem einen Glasrahmen (14) enthält, der auf mindestens einem Teil seines Umfangs zwischen die Kassette (10) und die Außenhaut (12) geklemmt ist.

6. Element nach einem der Ansprüche 1 bis 5, **dadurch gekennzeichnet, daß** es aus einem Textil besteht, das in einer Weise gewebt ist, die eine Verformung in allen Richtungen erlaubt.

7. Verfahren zur Herstellung eines Konstruktions- und Verkleidungselements nach einem der vorhergehenden Ansprüche, **dadurch gekennzeichnet, daß**
- auf einem Tragrahmen (54) eine Dekorfolie (56) angebracht wird, deren Abmessungen größer als die der zu realisierenden Struktur sind,
- der die Dekorfolie enthaltende Rahmen (54) in der Matrix (52) einer Form angeordnet wird,
- auf dem Stempel (50) der Form eine Masse (60) aus wärmeaushärtbarem Material und gegebenenfalls notwendige Verstärkungen und Kerne (59) oder Einbauten aufgebracht werden,
- die Form geschlossen wird, um die Dekorfolie zu formen und das wärmeaushärtbare Material im Formnest der Form zu verdichten,
- die Form bis zum Aushärten auf Polymerisationstemperatur des Harzes erwärmt, anschließend die Form geöffnet und der Tragrahmen und danach die geformte Struktur herausgezogen wird, welche zugeschnitten wird, und
- nach Anbringung der Zubehörteile, die in der Dicke des Elements angeordnet werden, die Außenhaut (12) befestigt wird.

## Claims

1. A structural and trimming part intended to fulfil the role of providing mechanical strength and a wall element, comprising a box member (10) of heat hardenable material containing reinforcing elements and a trimming skin (12) fixed to a large surface of the box member and constituting a body work panel, characterised in that a decorative sheet is over-moulded into the box member, on its other large surface of the inner side so that the part likewise fulfils an appearance function.

2. A part according to claim 1, characterised in that it further comprises an impermeable film or layer (58)of heat hardenable material under the aforesaid sheet.

3. A part according to claim 1 or 2, characterised in that the heat hardenable material is obtained from a heat hardenable plastics material, is compact or honeycomb and is reinforced by glass fibre.

4. A part according to claim 1, 2 or 3, characterised in that the box member contains over-moulded reinforcing elements such as anti-crush bars or lattice work.

5. A part according to any one of claims 1 to 4 constituting a vehicle door, further comprising a window gripping frame (14), at least over a part of its outer edge, between the box member (10) and the thin skin (12).

6. A part according to any one of claims I to 5, characterised in that it is constituted by a textile material woven according to a method which allows deformation in all directions.

7. A method of manufacturing a structural and trimming part according to any one of the preceding claims, characterised in that
- a decorative sheet (56) is based on a support frame (54), the dimensions of which are greater than those of the structure to be produced,
- the frame (54) comprising the decorative sheet is placed into the female part (52) of a mould,
- on the male part (50) of the mould, a mass (60) of heat hardenable material is placed, possibly together with the necessary reinforcements and core members (59) or inserts,
- the mould is closed in order to mould the decorative sheet and compress the heat hardenable material in the imprint of the mould,
- the mould is heated to a resin polymerising temperature until hardening is achieved, then the mould is opened and the support frame withdrawn, followed by the moulded structure which is then trimmed, and
- the lining skin (12) is fixed after fitment of the accessories which are intended to be placed within the thickness of the part.
